# EUROPEAN PATENT APPLICATION

(11) **EP 4 461 971 A1**
(43) Date of publication of application: **13.11.2024**
(21) Application number: 24175013.2
(22) Date of filing: 09.05.2024
(51) Int. Cl.: F16B 2/10, F16B 2/18, F21V 21/088, F21V 21/112, F21V 21/116

(54) **ROD CLAMPING DEVICE**

(30) Priority: 09.05.2023 CN 202310512480
(71) Applicant: GuangZhou JIECHENG Performing arts equipment CO.,LTD, Guangzhou Guangdong 510800 (CN)
(72) Inventor: LIANG, Jinping, Guangzhou, 510800 (CN)
(74) Representative: Greaves Brewster LLP

(57) **Abstract**

The present disclosure relates to a rod clamping device, including a clamping body. The clamping body includes a first clamping portion (1) and a second clamping portion (2) that are hinged to each other through a first hinge shaft (11); a second hinge portion (12) is provided at a position on the first clamping portion deviating from the first hinge shaft; a third hinge portion (14) is provided at a position on the second clamping portion deviating from the first hinge shaft; and a locking mechanism is provided and connected between the second hinge portion and the third hinge portion; the locking mechanism includes a handle (03) and a connecting rod (05), one end of the connecting rod is hinged to a fourth hinge portion (13) in a middle part of the handle, the other end of the connecting rod is hinged to the third hinge portion, and an end of the handle is hinged to the second hinge portion.

## Description

### TECHNICAL FIELD

The present disclosure relates to the technical field of stage lamp accessories, and in particular, to a rod clamping device.

### BACKGROUND

Television studios, theaters, performance halls, bars, mobile performance venues and other places all need to use stage lamps to create the lighting environment. Since the stage lamps need to be frequently adjusted according to the performance content, the stage lamps are generally installed and fixed in a detachable manner, such as hanging the lamps on a suspension rod or truss through hooks.

At present, the installation of the stage lamps is generally realized by connecting a hook body to the lamp through a connecting device, and then hanging the lamps on the suspension rod or truss. There are generally two ways to install the lamp, i.e., hanging installation and side hanging installation. For both installation methods, the lamp is installed by means of a mounting hook. The mounting hook is a clamping mounting structure surrounded by a hook body, a clamping plate and connecting bolts. Firstly, the rod body is inserted into a receiving groove of the hook body, and then a nut is rotated to shrink the clamping plate to clamp the rod body. The locking method of this mounting structure is relatively complicated and the locking structure is complex. Moreover, it takes a significant amount of time to lock the locking structure during the installation process, which is time-consuming and laborious.

### SUMMARY

In order to overcome the problems existing in the related art, the present disclosure provides a rod clamping device. The rod clamping device can quickly clamp a rod, resulting a simple structure. The rod clamping device can adapt to rods of different diameters, with a high working efficiency and a high safety factor.

The present disclosure provides a rod clamping device, including a clamping body. The clamping body includes a first clamping portion and a second clamping portion that are hinged to each other through a first hinge shaft. A second hinge portion is provided at a position on the first clamping portion deviating from the first hinge shaft. A third hinge portion is provided at a position on the second clamping portion deviating from the first hinge shaft. A locking mechanism is provided and connected between the second hinge portion and the third hinge portion. The locking mechanism includes a handle and a connecting rod. One end of the connecting rod is hinged to a fourth hinge portion in a middle part of the handle, the other end of the connecting rod is hinged to the third hinge portion, and an end of the handle is hinged to the second hinge portion.

When the rod clamping device is used, the handle is rotated, and under the traction of the connecting rod, the first clamping portion and the second clamping portion rotate relatively around the first hinge shaft and clamp the rod body.

In an embodiment, the rod clamping device further includes a safety mechanism configured to prevent the locking mechanism from being accidentally opened. The safety mechanism is movably connected between the clamping body and the locking mechanism to limit a rotation of the handle.

In an embodiment, the safety mechanism includes a trigger. A middle part of the trigger is hinged to the clamping body through a fifth hinge portion. A torsion spring is provided between the trigger and the clamping body. A buckle is provided below the trigger and abuts against an engaging slot on the handle. A pressing portion is provided and located above the trigger, and configured to manually open a connection between the buckle and the engaging slot. A plurality of engaging slots are provided at different positions on the handle, allowing the handle to be fixed at different positions.

In an embodiment, the rod clamping device further includes a clamping diameter adjustment mechanism configured to adjust an included angle between the first clamping portion and the second clamping portion when the locking mechanism is closed, so as to be applicable for clamping rods of different diameters. The clamping diameter adjustment mechanism adjusts an included angle between the first clamping portion and the second clamping portion by changing at least one distance among the first hinge shaft, the second hinge portion, the third hinge portion, and the fourth hinge portion.

In an embodiment, the clamping diameter adjustment mechanism is a length adjustment mechanism of the connecting rod. By changing a length of the connecting rod to change the distance between the third hinge portion and the fourth hinge portion, the included angle between the first clamping portion and the second clamping portion can be adjusted. In this case, the clamping diameter adjustment mechanism includes an external thread provided on the connecting rod, and an adjustment nut sleeved on the connecting rod for adjusting the length of the connecting rod. One end of the connecting rod is hinged to the fourth hinge portion. The other end of the connecting rod is provided with the external thread, and passes through a through hole on the hinge shaft of the third hinge portion and is then fitted with the adjustment nut. In some other embodiments, without changing the length of the connecting rod, at least one of the hinge shafts of the second hinge portion, the third hinge portion, and the fourth hinge portion has a connecting portion that can be fixed at different positions. By adjustably fixing at least one of the hinge shafts of the second hinge portion, the third hinge portion, and the fourth hinge portion at different positions, the distance among the second hinge portion, the third hinge portion, and the fourth hinge portion can be changed, and the same function of adjusting the included angle between the first clamping portion and the second clamping portion can also be achieved, which belongs to an equivalent scheme.

In an embodiment, the first hinge shaft is arranged parallel to hinge shafts of the second hinge portion, the third hinge portion, and the fourth hinge portion. When the handle is switched, the connecting rod swings on a plane perpendicular to the hinge shaft of the second hinge portion, and the plane is misaligned with the hinge shaft of the second hinge portion to avoid interference between the connecting rod and the hinge shaft of the second hinge portion. When the connecting rod intersects with the axis of the hinge shaft of the second hinge portion, the clamping body is in a dead center position where the rod body is clamped (the hinge shafts of the second hinge portion, the third hinge portion, and the fourth hinge portion are in a same plane). In this case, the included angle between the first clamping portion and the second clamping portion is the smallest, the clamping body can constantly clamp the rod body, while making sure the safety mechanism prevents the handle from being accidentally opened.

In an embodiment, the handle is provided with a positioning pillar. The second clamping portion is provided with a curved abutting surface. The positioning pillar abuts against the curved abutting surface to position the handle at a position which is just past a dead center position.

In an embodiment, a hinged end of the handle is provided with an axial slot extending to the fourth hinge portion, the connecting rod is arranged in the axial slot, and ears provided on both sides of the axial slot are connected to the second hinge portion, respectively. The ears on both sides of the axial slot of the handle are connected to the second hinge portion through two coaxial hinge shafts, respectively, which can avoid interference between the hinge shaft and the connecting rod, and also balance the forces on both sides of the handle.

In an embodiment, one of the first clamping portion and the second clamping portion acts as a fixation hook body configured to hook on the rod body, and the other of the first clamping portion and the second clamping portion acts as a movable hook body configured to clamp the rod body. The fixation hook body is in a "C" shape, and a lamp connecting portion is provided at a lower part of the fixation hook body and configured to connect a lamp.

In an embodiment, the first clamping portion and the second clamping portion each include a clamping portion with an arcuate surface configured to clamp the rod body.

The technical solution provided by this disclosure includes the following beneficial effects. Firstly, a lever principle of the handle is used to realize the clamping operation, which is labor-saving, convenient and fast. Secondly, pulling the claiming body using a connecting rod is simple in structure, and the lever principle is used to further achieve a labor-saving effect. Thirdly, by using the dead center position formed by the connecting rod overlapping with the second hinge portion during the swinging process, the rod body can be clamped, thereby saving the auxiliary force required to maintain the clamping state. It only needs to prevent the handle from being accidentally opened, thereby improving the safety factor.

It should be understood that the above general description and the following detailed description are exemplary and explanatory only, and do not limit the present disclosure.

### BRIEF DESCRIPTION OF THE DRAWINGS

The above objects and other objects, features and advantages of the present disclosure will become more apparent through a more detailed description of exemplary embodiments of the present disclosure with reference to the accompanying drawings. The same reference numerals generally represent the same components in the exemplary embodiments of the present disclosure.
FIG. 1 is a schematic perspective view of a rod clamping device according to an embodiment of the present disclosure.
FIG. 2 is a schematic diagram showing a structure of a rod clamping device clamping a rod according to an embodiment of the present disclosure.
FIG. 3 is a schematic diagram showing a structure of a rod clamping device clamping rods of different diameters according to an embodiment of the present disclosure.

In the accompanying drawings:
large-diameter rod 00; small-diameter rod 10; first clamping portion 01; second clamping portion 02; handle 03; safety mechanism 04; first hinge shaft 11; second hinge portion 12; fourth hinge portion 13; third hinge portion 14; fifth hinge portion 15; curved abutting surface 21; connecting rod 05; lamp connecting portion 06; positioning pillar 31; engaging slot 32; axial slot 33; ears 34; buckle 41; trigger 42; pressing portion 43; adjustment nut 51

### DETAILED DESCRIPTION OF THE EMBODIMENTS

Preferred embodiments of the present disclosure will be described in more detail below with reference to the accompanying drawings. Although preferred embodiments of the present disclosure are shown in the drawings, it should be understood that the present disclosure can be embodied in various forms and should not be limited to the embodiments set forth herein. On the contrary, these embodiments are provided to make the present disclosure more thorough and complete, and to fully convey the scope of the present disclosure to those skilled in the art.

The terms used in the present disclosure are used solely for the purpose of describing particular embodiments and are not intended to limit the present disclosure. The singular forms "a", "the" and "this" as used in the present disclosure and the appended claims are also intended to include the plural forms, unless the context clearly indicates otherwise. It should also be understood that the term "and/or" used herein is intended to include any and all possible combinations of one or more of the associated listed items.

It should be understood that although the terms "first", "second", "third", etc. may be used in the present disclosure to describe various information, the information should not be limited to these terms. These terms are used only to distinguish information of the same type from one another. For example, without departing from the scope of the present disclosure, first information may also be referred to as second information, and similarly, second information may also be referred to as first information. Therefore, the feature defined as "first" or "second" may explicitly or implicitly include one or more of such features. In the description of the present disclosure, "plurality" means two or more than two, unless otherwise clearly and specifically defined.

In view of the above problems, an embodiment of the present disclosure provides a rod clamping device. The rod clamping device can quickly clamp a rod, resulting a simple structure. The rod clamping device can adapt to rods of different diameters, with a high working efficiency and a high safety factor.

The technical solution of the embodiments of the present disclosure is described in detail below with reference to the accompanying drawings.

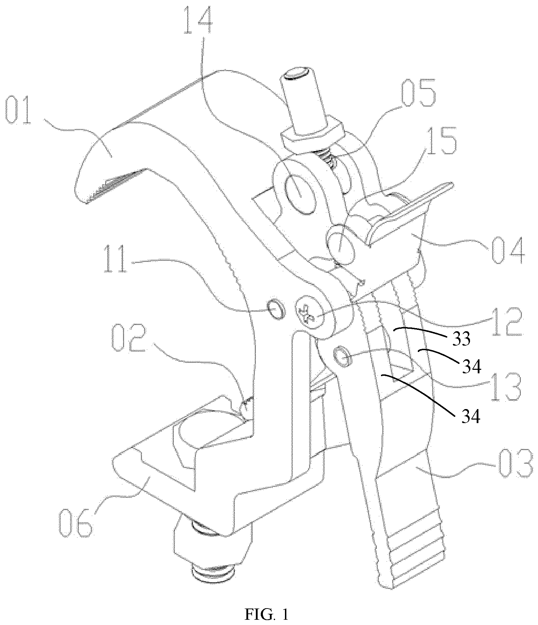

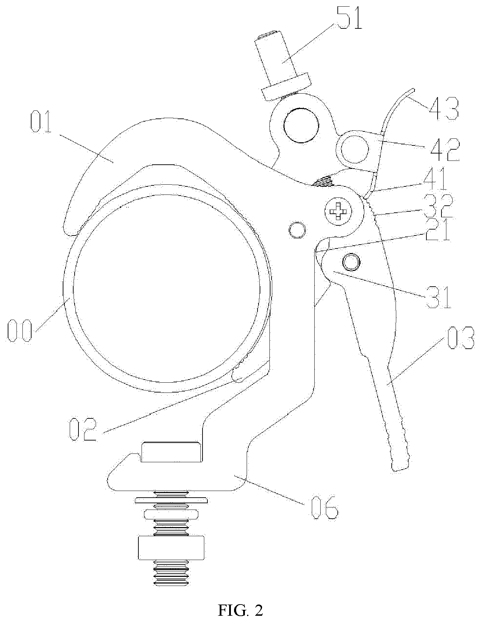

Referring to FIG. 1 and FIG. 2, a rod clamping device is provided, which includes a clamping body. The clamping body includes a first clamping portion 01 and a second clamping portion 02 that are hinged to each other through a first hinge shaft 11, forming a structure similar to pliers. A second hinge portion 12 is provided at a position on the first clamping portion 01 deviating from the first hinge shaft 11. A third hinge portion 14 is provided at a position on the second clamping portion 02 deviating from the first hinge shaft 11. A locking mechanism is provided and connected between the second hinge portion 12 and the third hinge portion 14. The locking mechanism includes a handle 03 and a connecting rod 05. One end of the connecting rod 05 is hinged to a fourth hinge portion 13 in a middle part of the handle 03, the other end of the connecting rod 05 is hinged to the third hinge portion, and an end of the handle 03 is hinged to the second hinge portion 12.

When the rod clamping device is used, the handle 03 is rotated, and under the traction of the connecting rod 05, the first clamping portion 01 and the second clamping portion 02 rotate relatively around the first hinge shaft 11 and clamp the rod body.

The rod clamping device further includes a safety mechanism 04 configured to prevent the locking mechanism from being accidentally opened. The safety mechanism 04 is movably connected between the clamping body and the locking mechanism, and can limit a rotation of the handle 03.

In an embodiment, the safety mechanism 04 includes a trigger 42. A middle part of the trigger 42 is hinged to the clamping body through a fifth hinge portion 15. A torsion spring is provided between the trigger 42 and the clamping body. A buckle 41 is provided below the trigger 42 and abuts against an engaging slot 32 on the handle 03. A pressing portion 43 is provided and located above the trigger 42, and configured to manually disconnect the buckle 41 from the engaging slot 32. A plurality of engaging slots 32 are provided at different positions on the handle 03, allowing the handle 03 to be fixed at different positions.

The first hinge shaft 11 is arranged parallel to hinge shafts of the second hinge portion 12, the third hinge portion 14, and the fourth hinge portion 13. When the handle 03 is switched, the connecting rod 05 swings on a plane perpendicular to the hinge shaft of the second hinge portion 12, and the plane is misaligned with the hinge shaft of the second hinge portion 12 to avoid interference between the connecting rod 05 and the hinge shaft of the second hinge portion 12. When the connecting rod 05 intersects with the axis of the hinge shaft of the second hinge portion 12, the clamping body is in a dead center position where the rod body is clamped, and in this case, the clamping body can constantly clamp the rod body, while making sure the safety mechanism 04 prevents the handle 03 from being accidentally opened.

The handle 03 is provided with a positioning pillar 31, and the second clamping portion 02 is provided with a curved abutting surface 21. The positioning pillar 31 abuts against the curved abutting surface 21 to position the handle 03 at a position which is just past the dead center position.

A hinged end of the handle 03 is provided with an axial slot 33 extending to the fourth hinge portion 13, the connecting rod 05 is arranged in the axial slot 33, and ears 34 provided on both sides of the axial slot 33 are connected to the second hinge portion 12, respectively. The ears 34 on both sides of the axial slot 33 of the handle 03 are connected to the second hinge portion 12 through two coaxial hinge shafts, respectively, which can avoid interference between the hinge shaft and the connecting rod 05, and also balance the forces on both sides of the handle 03.

One of the first clamping portion 01 and the second clamping portion 02 acts as a fixation hook body configured to hook on the rod body, and the other of the first clamping portion and the second clamping portion acts as a movable hook body configured to clamp the rod body. The fixation hook body is in a "C" shape, and a lamp connecting portion 06 is provided at a lower part of the fixation hook body and configured to connect a lamp.

The first clamping portion 01 and the second clamping portion 02 each include a clamping portion with an arcuate surface configured to clamp the rod body.

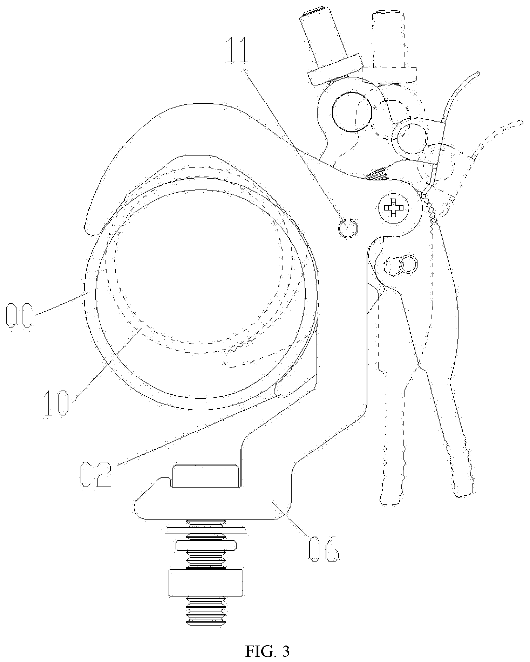

As shown in FIG. 3, the rod clamping device of the present disclosure can be applicable to clamp rods of different diameters. When a large-diameter rod 00 is clamped, the states of the components of the rod clamping device are indicated by the solid lines. When a small-diameter rod 10 is clamped, the position of the first clamping portion 01 remains unchanged, and the second clamping portion 02, the handle 03, the safety mechanism 04, and the connecting rod 05 all rotate around their respective hinge shafts by certain angles. In order to adjust the rod clamping device to adapt to the rods of different diameters, a length of the connecting rod is changed by simply rotating an adjustment nut, which is very easy to operate.

The function of being applicable to clamp rods of different diameters is achieved through a clamping diameter adjustment mechanism further included in the rod clamping device. The clamping diameter adjustment mechanism adjusts an included angle between the first clamping portion 01 and the second clamping portion 02 by changing at least one distance among the first hinge shaft 11, the second hinge portion 12, the third hinge portion 14, and the fourth hinge portion 13.

In an embodiment, the clamping diameter adjustment mechanism is a length adjustment mechanism of the connecting rod 05. By changing a length of the connecting rod 05 to change the distance between the third hinge portion 14 and the fourth hinge portion 13, the included angle between the first clamping portion 01 and the second clamping portion 02 can be adjusted. In this case, the clamping diameter adjustment mechanism includes an external thread provided on the connecting rod 05, and an adjustment nut 51 sleeved on the connecting rod for adjusting the length of the connecting rod. One end of the connecting rod 05 is hinged to the fourth hinge portion 13. The other end of the connecting rod 05 is provided with the external thread, and passes through a through hole on the hinge shaft of the third hinge portion 14 and is then fitted with the adjustment nut 51. In some other embodiments, without changing the length of the connecting rod 05, at least one of the hinge shafts of the second hinge portion 12, the third hinge portion 14, and the fourth hinge portion 13 has a connecting portion that can be fixed at different positions. By adjustably fixing at least one of the hinge shafts of the second hinge portion 12, the third hinge portion 14, and the fourth hinge portion 13 at different positions, the distance among the second hinge portion 12, the third hinge portion 14, and the fourth hinge portion 13 can be changed, and the same function of adjusting the included angle between the first clamping portion 01 and the second clamping portion 02 can also be achieved, which belongs to an equivalent scheme.

The technical solution provided by various embodiments of this disclosure includes the following beneficial effects:

Firstly, a lever principle of the handle is used to realize the clamping operation, which is labor-saving, convenient and fast.

Secondly, pulling the claiming body using a connecting rod is simple in structure, and the lever principle is used to further achieve a labor-saving effect.

Thirdly, by using the dead center position formed by the connecting rod overlapping with the second hinge portion during the swinging process, the rod body can be clamped, thereby saving the auxiliary force required to maintain the clamping state. It only needs to prevent the handle from being accidentally opened, thereby improving the safety factor.

Various embodiments of the present disclosure have been described above. The above description is exemplary, not exhaustive, and is not limited to the disclosed embodiments. Many modifications and variations will be apparent to those of ordinary skill in the art without departing from the scope and spirit of the described embodiments. The terms used herein are selected to best explain the principles of the embodiments, practical applications or improvements to the technology in the marketplace, or to enable others of ordinary skill in the art to understand the embodiments disclosed herein.

## Claims

1. A rod clamping device, comprising a clamping body, wherein
the clamping body comprises a first clamping portion (01) and a second clamping portion (02) that are hinged to each other through a first hinge shaft (11); a second hinge portion (12) is provided at a position on the first clamping portion (01) deviating from the first hinge shaft (11); a third hinge portion (14) is provided at a position on the second clamping portion (02) deviating from the first hinge shaft (11); and a locking mechanism is provided and connected between the second hinge portion (12) and the third hinge portion (14); and
the locking mechanism comprises a handle (03) and a connecting rod (05), one end of the connecting rod (05) is hinged to a fourth hinge portion (13) in a middle part of the handle (03), the other end of the connecting rod (05) is hinged to the third hinge portion (14), and an end of the handle (03) is hinged to the second hinge portion (12).

2. The rod clamping device according to claim 1, further comprising a safety mechanism (04) configured to prevent the locking mechanism from being accidentally opened, wherein the safety mechanism (04) is movably connected between the clamping body and the locking mechanism to limit a rotation of the handle (03).

3. The rod clamping device according to claim 2, wherein the safety mechanism (04) comprises a trigger (42); a middle part of the trigger (42) is hinged to the clamping body through a fifth hinge portion (15), and a torsion spring is provided between the trigger (42) and the clamping body; a buckle (41) is provided below the trigger (42) and abuts against an engaging slot (32) on the handle (03); and a pressing portion (43) is provided and located above the trigger (42), and configured to manually disconnect the buckle (41) from the engaging slot (32).

4. The rod clamping device according to any preceding claim, further comprising a clamping diameter adjustment mechanism that adjusts an included angle between the first clamping portion (01) and the second clamping portion (02) by changing at least one distance among the first hinge shaft (11), the second hinge portion (12), the third hinge portion (14), and the fourth hinge portion (13).

5. The rod clamping device according to claim 4, wherein the clamping diameter adjustment mechanism is a length adjustment mechanism of the connecting rod (05), and a distance between the third hinge portion (14) and the fourth hinge portion (13) is changed by changing a length of the connecting rod (05).

6. The rod clamping device according to claim 5, wherein the clamping diameter adjustment mechanism comprises an external thread provided on the connecting rod (05), and an adjustment nut (51); one end of the connecting rod (05) is hinged to the fourth hinge portion (13); and the other end of the connecting rod (05) is provided with the external thread, and passes through a through hole on a hinge shaft of the third hinge portion (14) and is then fitted with the adjustment nut (51).

7. The rod clamping device according to any of claims 4-6, wherein at least one of the hinge shafts of the second hinge portion (12), the third hinge portion (14), and the fourth hinge portion (13) has a connecting portion that can be fixed at different positions.

8. The rod clamping device according to any preceding claim, wherein the first hinge shaft (11) is arranged parallel to hinge shafts of the second hinge portion (12), the third hinge portion (14), and the fourth hinge portion (13); when the handle (03) is switched, the connecting rod (05) swings on a plane perpendicular to the hinge shaft of the second hinge portion (12), and the plane is misaligned with the hinge shaft of the second hinge portion (12) to avoid interference between the connecting rod (05) and the hinge shaft of the second hinge portion (12).

9. The rod clamping device according to claim 8, wherein the handle (03) is provided with a positioning pillar (31), the second clamping portion (02) is provided with a curved abutting surface (21), and the positioning pillar (31) abuts against the curved abutting surface (21) to position the handle (03) at a position which is just past a dead center position.

10. The rod clamping device according to claim 8 or claim 9, wherein a hinged end of the handle (03) is provided with an axial slot (33) extending to the fourth hinge portion (13), the connecting rod (05) is arranged in the axial slot (33), and ears (34) provided on both sides of the axial slot (33) are connected to the second hinge portion (12), respectively.

11. The rod clamping device according to any preceding claim, wherein one of the first clamping portion (01) and the second clamping portion (02) acts as a fixation hook body configured to hook on the rod body, and the other of the first clamping portion and the second clamping portion acts as a movable hook body configured to clamp the rod body; the fixation hook body is in a "C" shape, and a lamp connecting portion is provided at a lower part of the fixation hook body and configured to connect a lamp.

12. The rod clamping device according to any preceding claim, wherein the first clamping portion (01) and the second clamping portion (02) each comprise a clamping portion with an arcuate surface configured to clamp the rod body.
